(19)

**Europäisches Patentamt**
**European Patent Office**
**Office européen des brevets**

(11)  **EP 2 524 077 B1**

(12)  **EUROPEAN PATENT SPECIFICATION**

(45) Date of publication and mention
of the grant of the patent:
**12.08.2015  Bulletin 2015/33**

(51) Int Cl.:
***D04H 3/16*** *(2006.01)*

(21) Application number: **11704864.5**

(22) Date of filing: **12.01.2011**

(86) International application number:
**PCT/US2011/020982**

(87) International publication number:
**WO 2011/088117 (21.07.2011 Gazette 2011/29)**

(54) **BONDED WEB AND MANUFACTURING THEREOF**

VERBUNDVLIES UND DESSEN HERSTELLUNGSVERFAHREN

NON-TISSÉ LIÉ, AINSI QUE SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.01.2010  US 294374 P**

(43) Date of publication of application:
**21.11.2012  Bulletin 2012/47**

(73) Proprietors:
• **Fitesa Nonwoven, Inc.**
  **Simpsonville, SC 29681 (US)**
• **Fitesa Germany GmbH**
  **31224 Peine (DE)**

(72) Inventors:
• **BURKHART, Thomas**
  **66994 Dahn (DE)**
• **DANIELS, Walter D.**
  **Maineville**
  **Ohio 45039 (US)**
• **HARTL, Helmut**
  **38124 Braunschweig (DE)**

• **LU, Jonathan A.**
  **Cincinnati**
  **Ohio 45206 (US)**
• **KONG, Deying**
  **Vancouver**
  **Washington 98683 (US)**
• **NEWKIRK, David Dudley**
  **Greer**
  **South Carolina 29650 (US)**
• **TURNER, Robert H.**
  **Cincinnati**
  **Ohio 45220 (US)**
• **REYNOLDS, Lisa**
  **Morrow**
  **Ohio 45152 (US)**
• **DEBEER, Tonny**
  **Loveland**
  **Ohio 45140 (US)**

(74) Representative: **DeltaPatents B.V.**
  **Fellenoord 370**
  **5611 ZL Eindhoven (NL)**

(56) References cited:
**WO-A1-99/32699          WO-A2-01/49908
WO-A2-2007/016480     US-A- 5 057 357**

## Description

## Technical Field

This application relates to bonded webs and a method of producing a bonded web.

## Background of the Disclosure

Bonded webs, such as nonwoven fabrics are well known materials with wide application fields. Important applications encompass hygiene products and disposable articles, such as, for example, diapers. Many of these articles do not consist of a bonded web only, but include an elastomeric component to provide, for example, improved fit. This elastomeric component for instance is an elastic film. In a lamination process, the bonded web material is attached to this elastic film on one or on both sides of the film and provides the elastomeric component with a textile-like touch. Such laminates can be used, for example, in medical products or in Baby care products.

These laminates are generally produced on high-speed converting lines which apply tension in machine direction to the bonded webs. Applying tension to the bonded webs in machine direction will generally cause them to neck in, i.e. that their width is decreased. For obtaining optimal production, the bonded web is to completely cover the elastic film and typically neck-in is accounted for. The principle of accounting for the neck-in can be explained by using a bonded web which, before neck-in, is slightly wider than the film covered by the web, but after neck-in the bonded web has the same width as the film covered by the web. However, during typical conversion processes, the tension applied to the bonded web varies, causing variations in the neck-in and thus variations in the degree in which the bonded web covers the elastic film.

WO-A-99/32699 describes light-weight thermal-bonded nonwovens which have a low neck- in for a given tension in machine direction. This property is also mentioned herein as a high dimensional stability. In WO-A-99/32699 this high dimensional stability is achieved by continuous or discontinuous patterns of bonding regions with bond areas of between 10 to 50%.

Multilayered sheets or laminates of a bonded web and an elastic film of ten run through a mechanical after treatment to improve textile-like hand, appearance, and softness. These after treatments or activation processes, as they are sometimes called, generally are stretching methods. Depending on the degree of activation, the bonded web or the bonded web surface of a laminate is provided with a higher softness, a fleecy touch, and a more pleasant appearance. High degrees of stretching are used to obtain softest materials. When being stretched, the bonded webs can break unless they have sufficient extensibility. It is clear from consumer's point of view, that the softest material is the most preferred. In order to prevent breakage of the bonded web, the preference for the softest materials and thus the high degrees of activation lead to the use of highly extensible bonded webs.

US-patent no. 5,057,357 describes a nonwoven fabric having significantly improved tensile strength and stability (i.e. low MD strength and CD neck-in), and that is particularly useful in coverstock application. The nonwoven fabric is produced by a process of passing a fibrous web through a pair of heated calender nips that each engage an opposite face of the web.

US-A-2002/0119720 and US-A-2003/0207640 describe the so called ring rolling process, in which the bonded webs or the elastic laminates are activated between intermeshing teeth of activation rolls. The mechanical stretching can occur in length as well as in width.

Another example of a mechanically treated multilayer system is a bonded web of a carded material. This bonded web is described in WO-A-95/04654.

EP-A-I, 131,479 teaches another approach of activation: A spunbond nonwoven is bonded and then stretched in length to orientate the randomly laid filaments. Then the bonded web is bonded again to fix this filament orientation. These bonded webs show an increased extensibility in cross-machine-direction, and are suitable for ring rolling when laminated to an elastic film. Main disadvantage of this teaching is that two bonding steps as used, which is one bonding step more than usual and thus relatively time consuming and costly. Moreover, the extensibility is limited to the cross-machine-direction only. A further disadvantage is that the second bonding step increases the total bond area, which stiffens the bonded web, so that activation by ring rolling wherein the bonded web is highly stretched might not be possible without destroying the bonded web. Softness and appearance might also suffer from this second bonding step.

HEC-materials (high elongation carded materials) have an extensibility so that they are suitable for use in activation processes. Examples of such HEC-materials are FPN 333 at 24 GSM and HEC product FPN 332 available from Fiberweb Nonwovens of Simpsonville, South Carolina, USA. They also have a modest neck-in behavior. The main disadvantage is their comparatively high basis weight (and thus comparatively high raw material usage) to make them suitable for the mentioned purposes. The relatively high basis weight of carded materials leads to a further disadvantage: their higher price compared to spunbond materials makes them relatively expensive compared to spunbond materials.

WO-A-2008/024,739, for example, describes elastic laminates made from elastic films covered with carded bonded webs of basis weights between 22 g/m$^2$ and 30 g/m$^2$.

However, up to now bonded webs made from filaments are not used instead of carded nonwovens. The reason for that is a property of conventional filament containing bonded webs, such as spunbonds: if a spunbond shows a high extensibility it shows a low dimensional stability at the same time, and if a spunbond has a high dimensional stability, its extensibility is not sufficiently high. Examples are spunbond nonwovens made from polypropylene (good dimensional stability, low extensibility) or spunbond nonwovens from polypropylene/polyethylene bicomponent fibers (high extensibility, low dimensional stability).

Highly extensible spunbonds are commercially available from Fiberweb under the tradename Sofspan. These spunbonds show a low neck-in property. These spunbonds are characterized by a high tensile strength in cross-machine direction which makes them less preferred for mechanical after treatment (e.g., in a ring rolling process) operations due to their propensity to break.

## Summary of the Disclosure

It is one object of the present disclosure to provide bonded webs which show small variation of neck-in when the tension in machine direction varies and which are suitable for mechanically activatable (e.g., in ring-roll processes) in cross machine direction.

The bonded webs of claim 1 provide a solution to the object of the disclosure. The bonded webs according to claim 1 have a high dimensional stability, i.e. have a low neck-in in cross machine direction when under strain in the machine direction. In other words, these bonded webs have a high neckdown modulus. As the neck-in is low, the variations of the neck-in are small when the tension in the machine direction varies in comparison to bonded webs with a higher neck-in. As the variations in neck-in are small it is easier to control a lamination process using such a bonded web and to arrange the bonded web to cover a film to which the bonded web is laminated. Any uncovered parts of the film after lamination are yield losses. Because of the better coverage of the film by the bonded web, the yield losses are lower than for bonded webs with higher neck-in. Typically, in such a lamination process, there is an adhesive applied onto the film and the bonded web is then placed on the side of the film comprising the adhesive. Parts of the film are (after lamination) not covered by the bonded web because of variations of the width of the bonded web caused by neck-in variations can lead to exposed (not covered) parts of the film comprising the adhesive. The adhesive of these exposed parts can adhere to processing machinery and contaminate machinery. Because the neck-in variations are small, the use of bonded webs with low neck-in according to the present disclosure reduces the contamination to the machinery. Typically, in high-speed lines, the variations in tension are relatively large. As the neck-in of the bonded web according to the present disclosure is low, it is advantageous to use a bonded web according to the present disclosure on high speed lines.

In addition, the bonded webs described herein are highly extensible in cross machine direction and therefore are suitable for mechanical activation in that direction and thus are suitable for being subjected to the ring-roll process.

Further, the bonded webs described herein have a low CD-tensile strength even in embodiments at basis weights of 25 g/m$^2$ or less. A low CD-tensile strength is advantageous because the lower the tensile strength, the lower the energy dissipated during activation in cross machine direction, which reduces the formation of defects (e.g., pinholes) in the bonded webs. During ring rolling, a bonded web (as part of a laminate) can be activated in the cross machine direction with little damage or modification to the properties of the bonded web in the machine direction. Additionally, when activated at high speed, bonded webs with low tensile strength have a lower tendency to break.

Surprisingly, the inventors found that bonded webs having high neckdown modulus, high extensibility in cross machine direction, and low tensile strength in cross machine direction can be obtained by using filaments comprising a first polymer material with a first melt temperature and a second polymer material with a second melt temperature which is higher than the first melt temperature.

Said bonded webs can have a neck-in in cross machine direction of at most 20% (e.g., at most 15%, at most 10%, at most 7%, or at most 5%) when a sample of the bonded webs having a width of 275-325 mm is subjected to a tension in machine direction of 0-24 N and show a neckdown modulus of at least 800 N/m, (e.g., at least 1000 N/m, at least 1200 N/m, at least 1400 N/m, at least 1600 N/m, or at least 2000 N/m) and/or at most 3000 N/m (e.g., at most 2500 N/m, at most 2200 N/m, at most 2000 N/m, or at most 1800 N/m).

Moreover, the bonded webs of the present disclosure can be mechanically activated due to their high extensibility of at least 70%, (e.g., at least 75%, at least 85%, at least 100%, at least 125%, at least 150%, or at least 175%) and/or at most 300% (e.g., at most about 275%, at most 250%, at most 225%, or at most 200%) as measured according to DIN EN 29073-3, and due to their low tensile strength in cross-machine direction of at most 4 N/cm (e.g., at most 3.5 N/cm, at most 3 N/cm, at most 2.5 N/cm, or at most 2 N/cm) as measured according to DIN EN 29073-3.

In some embodiments, the filaments forming the bonded webs can be thermally bonded by calendering to form the bonded webs. Calendering is a preferred thermal bonding technology because it is generally cheaper than other thermal bonding methods (e.g., by using steam) and can be performed at a relatively high speed.

Preferred bonded webs of the present disclosure are additionally characterized by an abrasion according to the Sutherland Ink Rub Test with a weight loss of at most 0.25 mg/cm$^2$ (e.g., at most 0.15 mg/cm$^2$, at most 0.12 mg/cm$^2$, at most 0.1 mg/cm$^2$, or at most 0.08 mg/cm$^2$). It is advantageous if the bonded webs treated by the mechanical after treatments (such as ring rolling) not only have a high extensibility, but also a high abrasion resistance to prevent fuzz during processing. Fiber abrasion contaminates the machinery and causes uneconomic down-times of the production lines for cleaning.

In some embodiments, the bonded webs of the present disclosure comprise highly extensible multicomponent, preferably bicomponent, filaments or multiconstituent filaments or a mixture of said filaments. In some embodiments, the bonded webs of the present disclosure. provide a high softness along with a high abrasion resistance. It is advantageous to use bicomponent fibers, such as polypropylene-polyethylene bicomponent fibers, to form the bonded webs because of their relatively low cost. Each component can give the fibers those properties needed at the lowest price.

In some embodiments, these bonded webs have basis weights of at most 25 g/m", and in further embodiments of at most 23 g/m$^2$ (e.g., at most 22 g/m$^2$, at most 20 g/m$^2$, at most 18 g/m$^2$, at most 16 g/m$^2$, or at most 14 g/m$^2$). Although high basis weights can be used to obtain high dimensional stability (the higher the basis weight of a bonded web, the higher the force necessary to bring about neck-in), it is advantageous to obtain the desired dimensional stability with low basis weights to save raw materials and costs.

From the bonded webs of this disclosure, further bonded webs may be obtained by incrementally stretching said bonded webs defined above.

From the bonded webs of this disclosure multilayered sheets or laminates may be prepared comprising at least one bonded web as defined above in contact with a layer of another sheet material. In some embodiments, the bonded web as defined above is in contact with a layer of meltblown fibers and/or of an elastic film. For example, a laminate can be formed with an elastic film and one or two or more than two layers of bonded webs attached to the film. Such laminates can also be incrementally stretched, in the cross machine direction, in the machine direction, or in both the cross machine direction and the machine direction, as described herein.

Furthermore multilayered sheets or laminates may be obtained by incrementally stretching the multilayered sheets or laminates defined above.

The present disclosure also relates to a manufacturing process of bonded webs as defined in claim 12 as well as to the products obtained by said manufacturing process.

In some embodiments, when the calendering temperature used in the manufacturing is above the standard calendaring temperature, the bonds are of such a quality that a high abrasion resistance is obtained. Another reason for a high calendaring temperature is easy of ring rolling.

**Definitions**

The term "POLYMER" generally refers to homopolymers and copolymers, such as, for example, block, graft, random and alternating copolymers, as well as modifications thereof. Furthermore the term polymer shall include all possible molecular arrangements of the material. These arrangements include, but are not limited to isotactic, syndiotactic and random arrangements of the recurring units forming the polymer.

The term "POLYMER BLEND" refers to mixtures of at least two polymers with different physical and/or chemical properties. Thereby it is not important if these polymers are compatible or not.

The term "FILAMENT" refers to a thread of virtually unlimited length, whereas the term "FIBER" implies a definite length of the thread.

The term "MONOCOMPONENT FILAMENT" refers to a thread obtained by meltspinning a one polymer melt stream through a spinning nozzle with one or multiple openings. The obtained filament has only one geometrically identifiable cross section that goes along the entire length of the filament. A monocomponent filament can be formed from one polymer. This embodiment is called a "HOMOFILAMENT". A monocomponent filament can also be formed from a polymer mixture (e.g., a combination of polypropylene, polyethylene, or their copolymers). This embodiment is called a "MULTICONSTITUENT FILAMENT". The polymers forming the mixture can be compatible or incompatible with each other.

The term "MULTICOMPONENT FILAMENT" refers to a thread made from two or more separated polymer melt streams, which are combined in the spinning nozzle to form one single filament. This filament thus has a cross section that shows two or more identifiable areas extending continuously along the length of the filament. A preferred modification of multicomponent filaments are bicomponent filaments which are formed from two separated polymer melt streams. Most common are filaments with symmetric or asymmetric core-sheath, segmented pie, or side-by-side configuration. The polymers in the different sections usually differ in chemistry and/or physical properties. For example, the polymers can include polypropylene, polyethylene, or copolymers or combinations thereof. As an example, multicomponent filament can include a polypropylene in one section (e.g., the core) and a polyethylene in another section (e.g., the sheath). As another example, multicomponent filament can include a polypropylene in one section and a blend of a polyethylene and a polypropylene in another section.

The term "BONDED WEB" refers to a product having a structure of individual fibers, filaments, or threads which are randomly laid. Bonded webs have been formed from many processes as, for example, meltblowing processes, spunbonding processes, and bonded carded processes, wherein some of the fibers are bonded by fiber-to-fiber fusion, by fiber entanglement, by use of adhesive or by thermal bonds such as point bonding. The basis weight of bonded webs is usually expressed in gram of material per square meter ($g/m^2$).

The term "SPUNBOND" refers to a bonded web containing substantially continuous filaments which are formed by extruding a molten thermoplastic material from a plurality of fine capillaries of a spinnerette. The diameter of the extruded filaments is then rapidly reduced by, for example, drawing them by a gas stream or by other mechanisms.

The term "CARDED BONDED WEB" refers to a bonded web consisting of fibers having a definite length, which have been laid to form a bonded web by means of a card. The fibers can be man-made and/or can be of natural origin.

The term "MACHINE DIRECTION" or "MD" refers to the dimension of a bonded web extending in the direction of movement of the bonded web during its production. MD is often referred to as the "length" of the bonded web.

The term "CROSS MACHINE DIRECTION" or "CD" refers to the dimension of a bonded web extending perpendicular to the direction of movement during the production of said bonded web. CD is often referred to as the "width" of the bonded web.

The term "THERMAL POINT BONDING" refers to a process of thermal bonding in which fusible polymer fibers or filaments in form of a bonded web pass between two heated rolls, e.g. a calender. Usually one of these rolls has an engraving giving pins with distinct geometry, area, and distribution. These pins press the bonded web towards the opposite second roll, heat the points of contact, and partially melt the filaments or fibers. These partially molten fibers are pressed together to form a bonding point of the same geometry as the pin. The mechanical properties of a bonded web strongly depend on the bond temperature. Bonding points may also be referred to as bonding regions herein.

The term "STANDARD CALENDERING TEMPERATURE" refers to that temperature that provides the bonded web with the highest tensile strength. The standard calendering temperature is usually determined by preparing a variety of bonded webs which are distinguished by different calendering temperatures during thermal point bonding. The standard calendering temperature is that calendering temperature at which the spunbond nonwoven with the highest tenacity at break is formed under an otherwise fixed set of processing features, such as calendering pressure and speed. Calendering temperatures generally are monitored via the temperature of the calender oil.

The term "STICK POINT" refers to that temperature at which the web starts to stick to the calender and at which processing becomes unreliable. This may for instance occur when some of the polymer at the surface of fibers has partially or completely melted.

The term "EXTENSIBLE" or "EXTENSIBILTY" refers to the capability of a bonded web to stretch or extend in the direction of an applied force. In contrast to elastic materials (see definition below) these terms do not necessarily imply recovery properties, and in general the extensible material keeps the once obtained dimension upon release of the applied force.

The term "ELASTOMERIC" or "ELASTIC" refers to the capability of a bonded web to stretch or extend into the direction of an applied force, and, upon release of the stretching force, return or contract to approximately the original dimension.

The term "DIMENSIONAL STABILITY" refers to the property of a bonded web to resist a deformation perpendicular to the direction in which a force is applied. Such forces can occur, for example, during converting on high-speed diaper lines. This deformation perpendicular to the applied force is also called "NECK-IN". Dimensional stability is measured by a static method described below that determines the neck-in at predetermined tension forces in the range between 0 and 24 N (e.g., at 2 N intervals) in machine direction on samples having a width of 275-325 mm. A characteristic key parameter to describe the dimensional stability is the NECKDOWN MODULUS (in N/m). This term is obtained from a plot of bonded web width as a function of applied tension force. For smaller tensions, this function is typically a straight line. The neckdown modulus is the negative slope of this line. For the purposes of this disclosure, the neckdown modulus is determined from the bonded web-width / tension force diagram by fitting a line to the bonded web-width values obtained for tensile forces between 0 and 24 N on samples having a width of 275-325 mm. The neckdown modulus represents the behavior of a bonded web to neck-in under tension and is a characteristic parameter to describe dimensional stability. In general, the higher the neckdown modulus, the higher the dimensional stability.

The term "ELONGATION IN CROSS MACHINE DIRECTION" refers to the elongation of the bonded web when extended in CD with maximum peak. The determination is performed in accordance to DIN EN 29073-3.

The term "TENSILE STRENGTH IN CROSS MACHINE DIRECTION" refers to the tensile strength of the bonded web when extended in CD with maximum peak force. The determination is performed in accordance to DIN EN 29073-3.

The term "BOND AREA" refers to the portion of the area of the bonded web which contains bonded filaments. The bond area is determined in the non-stretched state of the bonded web and is the sum of the area provided by all bonding points of the bonded web. This term is expressed as a percentage of the total area of the bonded web.

The term "MULTILAYERED SHEET" refers to a composite of at least two layers of the same or different kind of sheet material. This can be, for example, a combination of a spunbond layer with a meltblown layer, a combination of two spunbond layers that differ in fiber geometry, polymer composition, or a combination of a spunbond layer with a film. This combination of a layer of bonded web with a layer of film is referred to as a "LAMINATE". These laminates result from a specific lamination process.

The term "MECHANICAL ACTIVATION" refers to a process of incremental stretching of a bonded web, a multilayered sheet, or a laminate, which, for example, comprises at least one extensible component and one elastomeric component. This can be, for example, a laminate of an extensible bonded web with an elastic film. During the incremental stretching the extensible component is permanently elongated. In case the extensible component is combined with an elastic component, the elastic component goes back to approximately its original position after release of the stretching force, while the extensible material keeps its then obtained extension. This gives the combination a softer hand.

The term "RING-ROLLING" refers to a specific variant of mechanical activation. This is an incremental stretching process which is applied to bonded webs, multilayered sheets, and laminates containing a nonwoven. Thereby the material is passed through intermeshing teethed rollers as described in US-A-2002/119720. The ring-rolling process activates the bonded webs in the machine direction and/or the cross machine direction.

## Detailed Description of the Disclosure

Regarding bonded web-formation technology with the exception of consolidating the formed spunbond nonwovens by calendering (which is regarded herein as a form of thermal bonding in which heat and pressure are applied) the nonwovens of the present disclosure can be manufactured by conventional technology. Spinning technology is described, for example, in F. Fourné, Synthetische Fasern, chapters 4 and 5, pp. 231-596, Carl Hanser Verlag, München, 1995. Examples of spinning technology are Reicofil technology from Reifenhauser Maschinenfabrik, Troisdorf, Germany, Hills technology from HILLS, Inc., W. Melbourne, FL 32904, USA, Neumag technology from NEUMAG GmbH, Neumünster, Germany or the S-Tex process. These processes are described by the manufacturers, and detailed information can be found on their corresponding homepages (http://www.reicofil.com/en/index.asp; http://www.hillsinc.netlindex.shtml; http://www.neumag.oerlikontextile.com/desktopdefault.aspx/tabid-84/). In general, thermoplastic polymers are molten in an extrusion process and the melt is squeezed through nozzles to give a polymer strand. This polymer strand is cooled and stretched by a gas stream or, alternatively, by a mechanical means such as, for example, a galette, or by the combination of gas stream and mechanical means. The thus obtained fine filaments are collected in a random manner on a transporting means to form a bonded web.

In a preferred embodiment of the process of this disclosure the filaments are quenched with streams of air impinging from two sides upon the filaments after their formation.

In another preferred embodiment of the process of this disclosure the filaments are collected on a collecting means to form a non-consolidated web with no or only low fiber orientation. Preferred bonded webs are characterized by a ratio of MD tensile strength / CD tensile strength of less than 3, preferably of less than 2.5.

In still another preferred embodiment of the process of this disclosure the filaments are formed from spinning beams with a number of spinning holes of less than 7.500 per meter, preferably between 5.000 and 7.000 per meter. The diameter of the spinning holes is preferably at least 0.5 mm.

Preferably the bonded webs of the present disclosure are spunbonds.

The filaments that form the bonded webs of the present disclosure comprise a first polymer material with a first melt temperature and a second polymer material with a second melt temperature. The second melt temperature is higher than the first melt temperature. In general, the filaments are either multiconstituent filaments or multicomponent filaments or a mixture of these. Besides these filaments adjuvants conventionally used in bonded webs can be present. These can be components present in the polymer strands forming the filaments, such as pigments, antistatic agents or fillers and/or components present at the surface of the filaments, such as lubricants or other processing aids. In addition small amounts of other filaments, for example homofilaments, can also be present. The amount of these adjuvants and/or other filaments in general is not more than 10 weight % of the bonded web.

Filaments with round geometry can be used, but other geometries, for example, triangular, might also be used. The multicomponent filaments can be of side-by-side-type or of core-sheath-type. Even multicomponent filaments of island-in-the-sea or segmented-pie-type are possible. Preferred in this disclosure are multicomponent filaments, very preferred bicomponent filaments of the core-sheath-type. Nevertheless, also mixtures of these fiber types can be used, if, for example, a multibeam spinning line is available.

The ratio to which extent the volumes of the core and of the sheath contribute to the whole filament is called the core-sheath-ratio. Preferred core/sheath ratios range from 95/5 to 5/95, very preferred from 85/15 to 50/50.

The filaments in the bonded webs of this disclosure generally are made from thermoplastic polymers or their blends. Preferred are polyolefins such as polypropylene or polyethylene, including their homopolymers as well as their copolymers. These polyolefins can be Ziegler-Natta- or metallocene-catalyzed polyolefins.

It is often sufficient to use these polyolefins without further modifying them by mixing or blending with other polymers, or by other modifications. For bicomponent filaments of the core-sheath-type, for example, it might be sufficient to have one single polymer in the core and another single polymer in the sheath. Specific examples are bicomponent filaments where the core consists of a metallocene- or Ziegler-Natta-polypropylene and the sheath consists of a polyethylene (for example of HDPE or LLDPE).

The use of polymer blends is also possible. In one embodiment the polymers are compatible with each other or even miscible. Such blends can consist of, for example, two polypropylenes that differ in molecular weight or in molecular weight distribution, or of a mixture between a polypropylene and a polyolefin copolymer. Such blends are described, for example, in US7,223,818 (US-A-2005/164,586) and US7,491,70 (US-A-2005/165,173). It should be understood that such blends are also possible for polyethylenes.

In another embodiment, the polymers blended together are at least partly miscible or even immiscible and form a dominant continuous phase and at least one dispersed phase. Examples of such mixtures are blends of polyethylene with polypropylene. These blends can also include a third component that is at least partially miscible with the two phases, for example, a copolymer of polypropylene with polyethylene. WO-A-96/16216, US-A-5,108,827, and US-A-6,207,602, for example, describe such mixtures.

A particularly suitable blend consists of isotactic polypropylene, present in an amount of about 65 to 80 percent by weight based upon the weight of the blend, of polyethylene, present in an amount from I to 5 percent by weight based upon the weight of the blend, and of a block or grafted polyolefin copolymer or terpolymer having at least a portion of the chain thereof miscible with the isotactic polypropylene, and wherein the block or grafted polyolefin or terpolymer is present in an amount from 15 to 30 percent by weight based upon the weight of the blend.

It should be understood that such blends not only can be spun as multiconstituent filaments, but can also be used in multicomponent filaments. Preferred are bicomponent filaments of the core-sheath-type that have a core-material selected from the group of polypropylenes or polyethylenes, mixtures of polypropylenes or mixtures of polyethylenes, polyethylene-polypropylene copolymers, mixtures of polypropylene with polyethylene or mixtures of polypropylene with polyethylene and polyethylene-polypropylene copolymers. The sheath-material is mainly selected from the group of polypropylene or polyethylene, but can also consist of the same combinations as the core. A very preferred combination is a bicomponent filament with polypropylene in the core and polyethylene in the sheath.

The bonded webs of this disclosure can consist of one bonded web layer only or can be used in multilayered sheets, for example a combination of a meltblown layer with at least one spunbond layer. Preferred is a single spunbond layer or a multilayered sheet comprising at least one spunbond layer. In an embodiment these bonded webs or multilayered sheets are laminated to an elastic film, or a net of elastic threads or strands by state of the art technology, and mechanically activated, for example, by ring rolling.

The basis weights of the bonded webs of this disclosure are in general $\leq 25$ g/m$^2$, (e.g., at most 23 g/m$^2$, at most 22 g/m$^2$, at most 20 g/m$^2$, at most 18 g/m$^2$, at most 16 g/m$^2$, or at most 14 g/m$^2$). The bonded webs of this disclosure provide a high dimensional stability and a high extensibility to make them convertible on high-speed lines, and mechanically activatable in, for example, ring-roll processes.

Dimensional stability is an advantageous property for bonded webs to be converted on high-speed diaper lines for several reasons. There can occur, for example, sudden changes in bonded web tension caused by the machinery or by slow-down and subsequent acceleration processes that cause dimensional deformation in CD-direction. If the bonded web sensitively reacts to tension changes it will perceivably vary in bonded web width.

These bonded webs often will be laminated to an elastic film of a defined width. This film should be completely covered by the nonwoven. Tolerances range in the area of millimeters. If the bonded web width is reduced too much by tension, that is if the neck-in of the bonded web is too high, it will not exactly fit to the film anymore. This increases the contamination to the machinery resulted from the adhesive on the elastic film, and also produces waste (which stands opposite to the efforts to save raw materials and costs).

The dimensional stability of a bonded web can be determined by measuring its neck-in under tension. A method to do this is described in the section "Testing methods". This method records the loss of bonded web width at different and well defined bonded web tensions. The data allow the calculation of the neckdown modulus, which is the parameter to quantitatively describe the bonded web's inclination to neck-in under tension. A bonded web with a low neckdown modulus can more easily be deformed than a bonded web with a high neckdown modulus. Practical experience taught that neckdown moduli of at least 800 N/m (e.g., at least 1000 N/m, at least 1200 N/m, at least 1400 N/m, at least 1600 N/m, or at least 2000 N/m) to allow a reliable processing. Several key parameters rule the neckdown modulus, such as, basis weight, fiber polymer, fiber size, and bonding conditions.

The bonded webs according to the present disclosure do not only have the demanded neck-down modulus, but also have a high extensibility. This property is very important as it allows mechanical after treatments, for example, by ring-roll processes, without damaging the nonwoven.

The extensibility of a bonded web usually can be determined together with its tensile strength on standard tensile testers, such as offered from Zwick/Roell (Ulm, Germany) or Instron Deutschland GmbH (Pfungstadt, Germany). Test methods are standard methods. For the purposes of this disclosure, the stress-strain curves are determined according to DIN EN 29073-3.

Extensibility is ruled by parameters such as basis weight, fiber polymer, fiber size, bonding conditions, and process conditions, to name the most prominent.

Particularly fiber size and fiber polymer have an obvious impact on these mechanical properties. Bonded webs from polypropylene generally show extensibilities well below 80%, whereas bicomponent filaments of the core-sheath-type often show extensibility up to 150% and more. The extensibility also increases with increasing fiber titer, but this effect generally is less prominent than the material effect.

The following table compares the elongation of some standard bonded webs made from polypropylene and from polypropylene/polyethylene bicomponent filaments. As these standard bonded webs have elongation, they also have the corresponding extensibility. It also illustrates the technical challenge: a high extensibility goes along with a low dimensional stability (expressed by a low neckdown modulus).

| Bonded web | CD-Elongation (%) | Neckdown modulus (N/m) |
| --- | --- | --- |
| 18 g/m$^2$; polypropylene | 56 | 1200 |
| | 40 | 1700 |
| 18 g/m$^2$; polypropylene/polyethylene bicomponent 50/50 | 195 | 425 |
| | 179 | 716 |

Not only extensibility is important for mechanical after treatments. Another factor is the force necessary to achieve a certain degree of extension. This is expressed by the CD tensile strength. Background is that the energy input into the nonwoven during the activation process should not be too high. Otherwise the bonded web cannot take up the amount of energy and breaks. Experience leads to a desire for a tensile strength in CD of at most 4 N/cm (e.g., at most 3.5 N/cm, at most 3 N/cm, at most 2.5 N/cm, or at most 2 N/cm) in addition to their high extensibility.

Thus, there are two properties that mutually exclude each other: a high extensibility of the bonded web (e.g., in the cross machine direction) combined with a high dimensional stability.

The bonded webs provided by this disclosure can be prepared by using the bonded web-forming technology described herein, e.g., using a special bonding process. In some embodiment, the bonding process is thermal bonding, in a further embodiment it is calendaring (where a combination of heat and pressure is applied to a web). This process results in a very well balancing of a sufficiently high bond area of the calender with a bonding temperature close to but still below the stick point of the bonded web. This is combined with an appropriate fiber size that still allows a high extensibility. In contrast to general expectations we surprisingly found that the extensibility of the bonded web does not decrease significantly under these well balanced conditions.

The bond area preferably covers between 16 and 35 % of the total area of the bonded web, preferably between 20 and 30 %.

The thermal bonding (e.g., thermal point bonding) of the bonded web is preferably performed by the action of one or more calenders. Different shapes of the single bonding points (or bonding egions) can e used at the calenders, such as oval or rhombic shape, ut any other shape of the bonding region may also be used successfully. The single bonding points are arranged on the calender in such a way and amount to get a defined bonding pattern and a defined bonding area. Bonding patterns of regularly repeating bonding points can be used, for example bonding points arranged in the form of repeating hexagons, squares, triangles or lines. Alternatively randomly distributed bonding points can be used.

A thermal calendering process allows a very efficient and economic bonding of bonded webs made from thermoplastic polymers. A parameter of this technology is the temperature, which should be adjusted towards the fiber polymer. If the calender temperature is too high, the filaments will melt and stick to the rolls, bringing along a production stop and cleaning costs for the calender. If, on the other hand, the temperature of the calender is too low, the filaments will not get bonded, and the bonded web looses dimensional stability, which makes further processing and converting impossible.

To avoid these difficulties, the bonding of the web generally is done at a calender temperature that provides the bonded web with maximum strength and often also with maximum extensibility. However, the obtained maximum strength, particularly in CD direction, conflicts with the feasibility of the materials to be mechanically activated (e.g., in a ring rolling process). The high force necessary to bring about a certain extension increases the possibility that the nonwoven will be damaged during activation and additionally causes a higher energy consumption by the ring rolling devices used.

In accordance with the present invention the bonded webs of this disclosure are bonded at calender temperatures between the stick point and the standard temperature that provides them with maximum strength. Due to the shape of a typical bonding curve (function of bonded web tensile breaking strength versus calendering temperature), the tensile strength decreases such that tensile values below 17.5 N/5 cm can be achieved. Bonded webs having such a tensile strength can be mechanically activated without damaging the nonwoven (e.g., without producing pinholes in the nonwoven). If the bonded webs are bonded at a calendar temperature lower than the standard temperature, the bonded webs thus formed, although have a relatively low tensile strength (which reduces damage to the nonwoven during a ring rolling process), are typically not sufficiently bonded to have a desired dimensional stability.

However, also the extensibility is affected, which can make a careful adjustment of the titer necessary. The inventors have found that filaments with titers between 1 dtex and 3 dtex, preferably between 2 and 2.8 dtex, are particularly suitable for the bonded webs of the present disclosure. In some embodiments, filaments can range from 1.6 to 3.6 dtex, from 1.8 to 3.4 dtex; from 2.0 to 3.2 dtex, from 2.2 to 3.0 dtex, or from 2.4 to 2.8 dtex. Within these titer ranges, particularly bonded webs from core-sheath-type bico filaments give the demanded low tensile strength in CD direction and still provide the bonded web with sufficient extensibility to allow undamaged activation.

Another characteristic of the bonded web of the present disclosure is their high abrasion resistance. This is particularly true for bicomponent filaments based on polypropylene core and polyethylene sheath.

The bonding conditions that provide the bonded webs with high tensile strength usually do not provide them with the abrasion resistance demanded for mechanical after treatments. It is believed that abrasion resistance depends on the quality of the bonding point, and depends on how well the fibers of the bonded web are welded together. This usually is no issue for filaments made from only one polymer, for example, polypropylene, but selecting the bond conditions is a parameter to consider if the fiber consists of two incompatible polymers as is the case in polypropylene/polyethylene bicomponent filaments whereby the polyethylene is used in the sheath. A high polyethylene content of the fiber then is very advantageous for the bonding strength.

However in relation to other aspects, a high polypropylene content is preferred. With a lower cost price of polypropylene than polyethylene, a high polypropylene content not only reduces the material costs, but it also helps improving dimensional stability of the whole bonded web without sacrificing extensibility. Thus, preferred core/sheath volume-ratios range between However, the bond temperatures usually used for pure polypropylene are well above the melting point of polyethylene and may even be close to the stick point of polyethylene. The use of such temperatures for these bicomonents, wherein the polyethylene is used in the sheath inevitably would cause sticking of the bonded web to the calender, and a roller wrap would follow. This is because the polyethylene in the sheath is the first material to be exposed to the heat of the calender (i.e. it experiences the highest temperatures, only conducting heat to the core material which has a higher melting point and sticking point) and is in direct contact with the calendar.

To achieve a high abrasion resistance for the bonded webs, the present disclosure combines a high bond area typical for the bonded webs of this disclosure with a high bond temperature. We have found that bonding such bonded webs at calender temperatures close to the stick point (and above the standard calendering temperature) of the bonded web is particularly effective. Very helpful is an additionally high bond area of the calender, which generally amounts between 16% and 35% (e.g., between 20% and 30% or between 18% and 25%) of the total area of the bonded web. To achieve the necessary higher bond temperatures it may be of advantage to use calenders that show a lower adhesion to the softened or molten polymers, for example, to use calenders with rolls modified by a special surface treatment to result in anti-stick properties of the calender surface, for example by covering the surface of one or more calender rolls with a sheet made of fluoro-polymer, such as polytetrafluoroethylene. Utilization of higher bond temperatures allows measure-ment results for abrasion resistance, according to the Sutherland Ink Rub Test, of less than 0.25 mg/crrr' (e.g., less than 0.15 mg/cm').

TESTING APPARATUS AND TESTTNG METHODS

Apparatus and method to determine dimensional stability (neck-in)

*Dynamic neck-in testing method*

The neck-in behavior can be evaluated dynamically meaning that the bonded web is under motion during testing, enabling the direct simulation of the tension applied to bonded web facing materials during high speed rewinding and slitting or other converting processes.

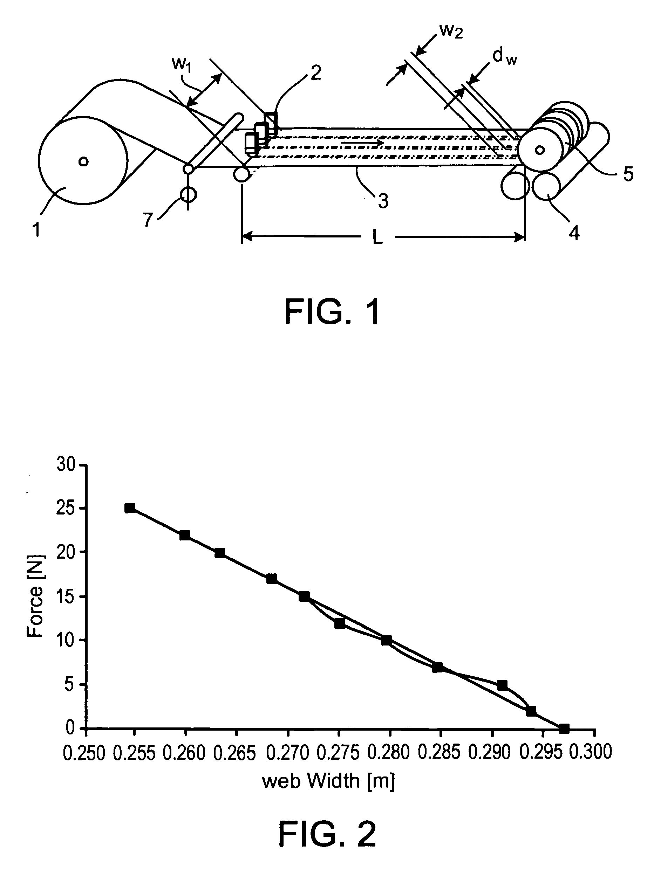

The apparatus for the dynamic neck-in testing is shown in Figure 1. This apparatus consists of an unwind station for the precursor material (1), whereby the bonded web is submitted in a pre-determined width of $w_1$ at constant line speed, for example in a width $w_1 = 1$ m. Circular knifes (2), which are mounted at a fixed pitch, slit the spunbond into a plurality of sheets, for example into four sheets of each 250 mm width at constant line speed of $v = 100$ m/min. Thereby the bonded web tension is detected by a tension control unit (7) and is continuously adjusted by a drive control for each measurement to a predetermined value of a tension force ($F_x$). The four bonded webs of width $w_1$ run parallel through a predetermined distance L, for example of L = 2.5 m length (3). At the end of this distance a winder (4) is placed, winding the parallel bonded web sheets to a plurality of rolls (5). As a result of the applied tension force ($F_x$) to the bonded web a decrease in perpendicular dimension of the bonded web appears. This change in dimension is measured at the end of the distance L, reporting the width of the single bonded web parts ($w_2$) and the distance between these sheets ($d_w$).

The measurements of the bonded web width $w_2$ and the distance $d_w$ between the bonded web sheets takes place at predetermined ramped tension forces in the range between 0 and 100 N, for example in ramps of 20, 40, 60, 80 and 100 N, which are applied to the bonded web.

The dynamic neck-in at a selected tension force $F_x$ (Neck-in$_{Fx}$) is expressed in percent and calculated by the following formula:

$$\text{Neck-in}_{Fx} \ (\%) = [d_w \ / \ (w_1 \ / n)] \ * \ 100$$

using $d_w$ (mm) = $[(w_1/n) - w_{2,Fx}]$, wherein $w_{2,\ Fx}$ is the width $w_2$ at a selected tension force $F_x$ and n is the number of sheets into the bonded web is split, for example 4. The plot of bonded web width (in m) under certain values of the tensions force ($F_x$) versus the applied tension force (in N) gives a straight line (Figure 2). The negative slope of it is called neckdown modulus. It describes the susceptibility of a bonded web to neck-in under tension, and is a characteristic parameter to describe dimensional stability. The higher the neckdown modulus, the higher is the dimensional stability.

*Static neck-in testing method*

A sample having a width (i.e., in the cross machine direction) between 275 - 325 mm and a length (i.e., in the machine direction) of 1.8-2m long was laid flat on a table. One end of the sample was affixed to the table using a tape. Between 5-10 cm of the sample at the unaffixed end was folded over a dowel (which had an inelastic string affixed to both ends) and was taped to the sample so that force may be applied evenly across the sample by pulling upon the string affixed to the dowel in the machine direction.

The width of the sample was measured at the middle of the sample (0.9-1 m point in length) and was record as the width at 0 N force. While the sample was pulled under a 2 N force using a force gauge, the width of the sample was measured again at the middle of the sample and was recorded as the width at 2 N force. This step was repeated by taking measurement of the width at increments of 2 N strain up to a maximum of 24N. The neckdown modulus was obtained by calculating the linear change in tension over the change in width using the 13 data points obtained above.

Determination of tensile strength and extensibility

Herein, the tensile strength and the extensibility of the bonded webs are determined in accordance to DIN EN 29073-3, on a Zwick tensile tester, using a specimen with a length of 100 mm and a width of 50 mm. The applied crosshead speed was 200 mm/min. Each material was tested 12 x in machine direction (MD) and 12 x in cross machine direction (CD). The stress-strain plot reports maximum peak force ($F_{max}$) in N/5cm, as well as the elongation (%) at maximum peak force.

Determination of the titer

The fiber size is determined with a microscope having an internal ruler in either scale units or microns. The titer is then calculated with regard to the polymer density in either dtex (g/10000 m) or in denier ("den", g/9000m).

Sutherland Ink Rub Test (Abrasion resistance)

The abrasion resistance was measured by using the Sutherland Ink Rub test. The test was performed generally following ASTM method 5264 except that 320 grit sandpaper and a one pound weight were used. Specifically, after a surface of a fabric test sample was abraded by rubbing for 20 cycles at a rate of 42 cycles/minute, a fiber removal tape (a polymask protection tape sold by 3M as part number 3126) was held against the fabric test sample for 20 seconds under a weight of 2,200 grams. The fiber removal tape was weighted before and after application to the abraded surface. The change in weight was recorded to give the weight of fuzz removed from the abraded test sample. Three specimens of each fabric candidate were abraded to allow an average to be generated.

The Sutherland Ink Rub test used a sample size of 11.0 cm x 4.0 cm and therefore had a 44 cm$^2$ area in contact with the sandpaper. The weight loss measured by the test was reported as mg/cm$^2$. A 27 g/m$^2$ HEC fabric sample (Fiberweb, Simpsonville, SC) was used as a control. The control sample (5 specimens) was abraded with each set of fabric candidates in order to obtain the correlation factor needed for the calculation of the Ink Rub Test result. The correlation factor was needed to account for differences in results due to lot to lot changes in the sandpaper. As specified in the ASTM test method, the final Ink Rub Result was calculated based on this correlation factor and the actual measured weight loss of the fabric.

Ring-roll tests

Ring-rolling tests were performed on a pilot ring-roll equipment. The upper ring-roller and the lower ring roller had an outer diameter of 278 mm, and the distance from top of the ring to the bottom was 4 mm. The distance between each two neighboring rings was 1.5 mm. The edges of the rings were rounded to reduce the scissor effect (cutting).

The test equipment was set up such that the engagement depth was 2.0 mm. The speed of the rolls, as well as that of the fabric passing through, was 15 m/min. After ring-rolling, the samples were visually characterized to determine whether bonding points were damaged or holes had occurred.

The bonded webs, multilayered sheet, incrementally stretched bonded webs and incrementally stretched multilayered sheet of this disclosure can be used after ring-rolling in hygiene products, such as personal care articles or in medical articles, preferably in diapers or in femcare articles, and especially preferred for a topsheet, backsheet, backear or side panel cover of a diaper.

The following examples will explain the disclosure without limiting it.

Comparative examples

These spunbonded bicomponent fabrics were produced on a pilot scale Reicofil - 3 type line similar to the machines currently offered for sale by the Reifenhauser Company ..Machinenfabrik in Troisdorf, Germany (see, e.g., U.S. Patent Nos. 5,162,074; 5,344,297; 5,466,410; and 5,814,349). The bicomponent fabrics were made using Dow 6834 HDPE (17 MI, density: 0.950) as the sheath polymer and Basell's Moplen HP462R (25 MFR) as the core polymer. Specifically, the spunbonded bicomponent fabric was produced by melting the sheath and core polymers in two different extruders, conveying the molten polymers to a spin bank or spin beam assembly (which included a spinneret plate and a distribution plate) connected to the extruders for separately receiving the molten sheath and core polymers, combining the polymers at the spinneret orifices to form a curtain of multicomponent fibers, quenching the fibers with cool air as they exited as a full width curtain of fibers, attenuating the fibers in the curtain, depositing the curtain (or multiple curtains depending on the number of spin beams) of attenuated fibers via a filament depositing unit (a diffuser) on a moving wire or moving conveyor belt, and then bonding the resulting bonded web of fibers to yield a nonwoven fabric.

To make the fabrics, special attention was given to bonding the bonded web of spunbonded fibers. An embossed calender pattern was used, the calender temperature and fabric speed were carefully selected. Calender oil temperature used was "standard"; that is the temperature which results in the highest tensile strength of the fabric. While the calender temperature was not directly measured, the hot oil temperature circulating within the embossing and smooth rolls of the calender were significantly higher than the melting temperature of the polyethylene sheath polymer.

Comparative Example C1: Standard polypropylene spunbond

On a conventional spunbond RF3 line (Reifenhäuser, Troisdorf, Germany), a 18 g/m² polypropylene spunbond was prepared. The polypropylene had a meltflow index (MFI) of 25 g/10 min (ISO 1133; 230 °C, 2.16 kg). The throughput was set to 200 kg/h*m, and the belt speed was 169 m/min. The oil temperature of the calender was set to 150 °C. The resulting nonwoven had the mechanical properties (according DIN 53857) as listed in the table at the end of the experimental part.

Comparative Example C2: Standard spunbond made from bicomponent filaments

The preparation of this spunbond was as described for Example C1 with the exception that polypropylene/polyethylene bicomponent filaments were formed with a volume ratio of 70/30. Typical bonded web properties are listed in the table at the end of the experimental part.

Examples according to the disclosure

Examples 1-3:

On a spunbond line with bicomponent ("bico") capability, different spunbonds were prepared. The filaments prepared were of core/sheath type with polypropylene ("PP") core, polyethylene ("PE") sheath and with different core/sheath ratios. The PP had a meltflow index (MFI) of 25 g/10min (ISO 1133; 230 °C; 2.16 kg) and the PE had a meltflow index of 17 g/10 min (ISO 1133; 190 °C; 2.16 kg). The line settings were adjusted such that the filaments had the desired average titer. Bonding of the spunbond nonwovens occurred with a standard calender and with different bonding areas. The bonding temperature was set above the standard calendering temperature. Details of the manufacture of the spunbond nonwovens and of their properties are given in the following table. The neckdown modulus values were obtained by using the static neck-in testing method described above.

| Material | Fmax (CD) | Elongation in CD @ Fmax | Titer | Ink Rub Test | Neckdown Modulus | Ringroll Test | Calender Bond Area | Calender Oil Temperature |
|---|---|---|---|---|---|---|---|---|
| | N/cm | % | dtex | mg/cm2 | N/m | | % | |
| Example C1 20 g/m$^2$ PP spunbond | 5.2 | 64 | 2.4 | 0.150 | 1677 | Failed | 19 | standard |
| Example C2 22 g/m$^2$ PP/PE bico 70/30 | 2.4 | 200 | 2.5 | 0.326 | 730 | Okay | 16 | standard |
| Examples of the disclosure | | | | | | | | |
| Example 1 21 g/m$^2$ PP/PE bico 50/50 | 3.0 | 171 | 3.0 | 0.242 | 1591 | Okay | 34 | standard + 10 °C |
| Example 2 22 g/m$^2$ PP/PE bico 70/30 | 2.8 | 139 | 2.7 | 0.200 | 1641 | Okay | 18 | standard + 15 °C |
| Example 3 22 g/m$^2$ PP/PE bico 70/30 | 2.4 | 88 | 2.5 | 0.080 | 1571 | Okay | 25 | standard + 25 °C |
| Calender oil temperature: "standard" is that temperature which gives the highest tensile strength of the fabric. | | | | | | | | |

**Example C1:** Pure PP spunbond fails in elongation, Fmax and the ringroll test. It illustrates that a high neckdown modulus is linked with a low extensibility.

**Example C2:** The PP/PE bico fails in neckdown modulus and abrasion resistance. It illustrates that a high extensibility is linked with a low neckdown modulus.

**Example 1:** This example shows the benefits of an increased calender area and a slightly increased bond temperature, which results in improved abrasion resistance and clearly increased neckdown modulus compared to example C2.

**Example 2:** Compared to example C2, this example shows the benefits of a clearly higher bond temperature: abrasion resistance and neckdown modulus drastically improve.

**Example 3:** Shows clearly the benefits of high bond area and high bond temperature (here close to the stick point), which results in a high neckdown modulus

Materials made according to embodiments of the present disclosure can be incorporated into absorbent articles. It is contemplated that any embodiment of material disclosed herein can be used as part, or parts, or substantially all, or all of one or more of any element of an absorbent article such as diapers or medical products.

An absorbent article can absorb liquid bodily exudates such as sweat, blood, urine, menses, etc. An absorbent article can be a product or a material. Examples of absorbent articles include products and/or materials for sanitary protection, hygienic use, and/or wound care.

Some absorbent articles are disposable. A disposable absorbent article is configured to be partly or wholly disposed of after a single use. A disposable absorbent article is configured such that the soiled article, or a soiled portion of the article, is not intended to be restored and reused (e.g., not intended to be laundered). Examples of disposable absorbent articles include wound care products, such as bandages and dressings, as well as feminine care products, such as pads and liners. Disposable absorbent articles can use embodiments of the present disclosure.

Some absorbent articles are wearable. A wearable absorbent article is configured to be worn on or around a body of a wearer. Wearable absorbent articles can also be disposable. Examples of disposable wearable absorbent articles include disposable diapers and disposable incontinence undergarments. A disposable wearable absorbent article can receive and contain bodily exudates while being worn by a wearer. In some embodiments, a disposable wearable absorbent article can include a topsheet, an absorbent core, an outer cover, a waist opening, and leg openings. Disposable wearable absorbent articles can use embodiments of the present disclosure.

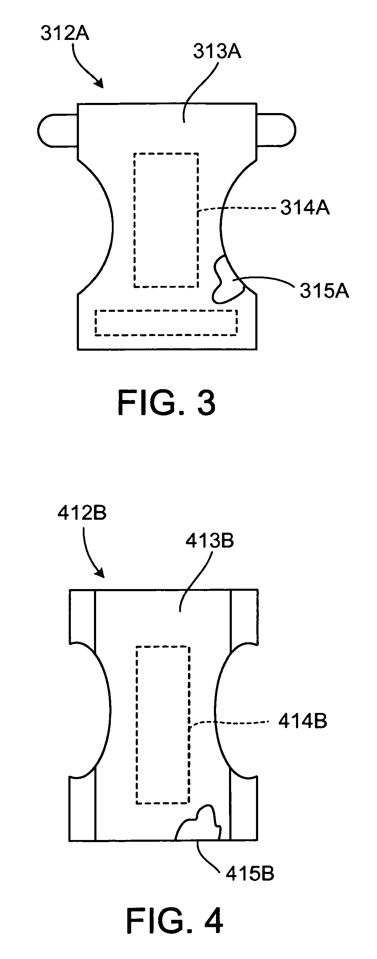

Figures 3-5 illustrate various absorbent articles, with one or more elements made with materials according to embodiments of the present disclosure. For clarity, Figures 3-5 do not illustrate all details of the absorbent articles.

Figure 3 is an inside plan view illustrating a front-fastenable wearable absorbent article 312A. The present disclosure contemplates that, an absorbent article that is configured to be front-fastenable can also be configured to be rear fastenable or side-fastenable, as will be understood by one of ordinary skill in the art.

The front-fastenable wearable absorbent article 312A includes a wearer-facing external surface 313A, a garment-facing external surface 315A, and an absorbent material 314A. The absorbent material 314A is disposed between the wearer-facing external surface 313A and the garment-facing external surface 315A.

The wearer-facing external surface 313A is a layer of one or more materials that form at least a portion of an inside of the front-fastenable wearable absorbent article and faces a wearer when the absorbent article 312A is worn by the wearer. In Figure 3, a portion of the wearer-facing external surface 313A is illustrated as broken-away, in order to show the garment-facing external surface 315A. A wearer-facing external surface is sometimes referred to as a topsheet. The wearer-facing external surface 313A is configured to be liquid permeable, such that bodily fluids received by the absorbent article 312A can pass through the wearer-facing external surface 313A to the absorbent material 314A. In various embodiments, a wearer-facing external surface can include a nonwoven material and/or other materials.

The absorbent material 314A is disposed subjacent to the wearer-facing external surface 313A and superjacent to the garment-facing external surface 315A, in at least a portion of the absorbent article 312A. In some embodiments, an absorbent material of an absorbent article is part of a structure referred to as an absorbent core. The absorbent material 314A is configured to be liquid absorbent, such that the absorbent material 314A can absorb bodily fluids received by the absorbent article 312A. In various embodiments, an absorbent material can include wood pulp, or super absorbent polymers (SAP), or another kind of absorbent material, or any combinations of any of these materials.

The garment-facing external surface 315A is a layer of one or more materials that form at least a portion of an outside of the front-fastenable wearable absorbent article and faces a wearer's garments when the absorbent article 312A is worn by the wearer. A garment-facing external surface is sometimes referred to as a backsheet. The garment-facing external surface 315A is configured to be liquid impermeable, such that bodily fluids received by the absorbent article 312A cannot pass through the garment-facing external surface 313A. In various embodiments, a garment-facing external surface can include a film and/or other materials.

The front-fastenable wearable absorbent article 312A also includes extensible side ears, configured to stretch around the sides of a wearer when the article 312A is worn. The extensible side ears also include a fastener, to fasten the back of the article to the front. Each of the extensible side ears can be formed of any of the embodiments of a laminate, as described herein. As a first example, a side ear can be formed of a nonwoven-film laminate that is incrementally stretched. As a second example, a side ear can be formed of a nonwoven-film-nonwoven laminate that is incrementally stretched. In either of these examples, additional materials can be added, and additional processing can be employed.

Figure 4 is an inside plan view illustrating a pant-type wearable absorbent article 412B. The present disclosure contemplates that, an absorbent article that is configured to be pant-type can be configured to be side-fastenable or without fasteners, as will be understood by one of ordinary skill in the art.

The pant-type wearable absorbent article 412B includes a wearer-facing external surface 413B, a garment-facing external surface 415B, and an absorbent material 414B, which are each generally configured in the same manner as the like-numbered element in the embodiment of Figure 3.

The pant-type wearable absorbent article 412B also includes extensible side panels, configured to stretch around the sides of a wearer when the article 412B is worn. The extensible side panels may or may not include a fastener, to fasten the back of the article to the front. Each of the extensible side panels can be formed of any of the embodiments of a laminate, as described herein. As a first example, a side panel can be formed of a nonwoven-film laminate that is incrementally stretched. As a second example, a side panel can be formed of a nonwoven-film-nonwoven laminate that is incrementally stretched. In either of these examples, additional materials can be added, and additional processing can be employed.

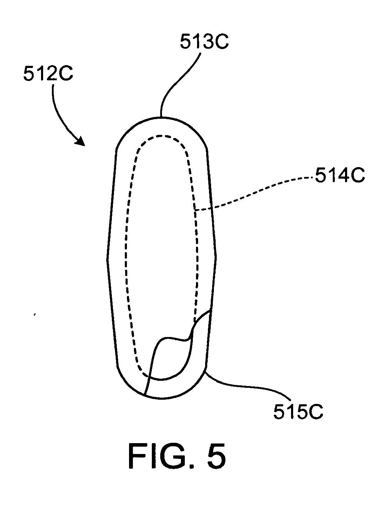

Figure 5 is an inside plan view illustrating a feminine pad absorbent article 512C. The feminine pad absorbent article 512C includes a wearer-facing external surface 513C, a garment-facing external surface 515C, and an absorbent material 514C, which are each configured in a manner similar to the like-numbered element in the embodiments of Figures 3 and 4.

The dimensions and values disclosed herein are not to be understood as being strictly limited to the exact numerical values recited. Instead, unless otherwise specified, each such dimension is intended to mean both the recited value and a functionally equivalent range surrounding that value.

**Claims**

1. A bonded web comprising filaments comprising a first polymer material with a first melt temperature and a second polymer material with a second melt temperature which is higher than the first melt temperature, said bonded web having

   - a neckdown modulus in cross machine direction of at least 800 N/m,
   - an extensibility in cross machine direction of at least 70% as measured according to DIN EN 29073-3 , and
   - a tensile strength in cross machine direction of at most 4 N/cm as measured according to DIN EN 29073-3, and

   wherein the bonds are realized by calendering at a calender temperature between the stick point and the standard calendering temperature which is the temperature at which the bonded web with the largest tensile strength at break in machine direction is formed.

2. A bonded web according to claim 1 , wherein the neckdown modulus in cross machine direction is at least 1000 N/m and wherein the tensile strength in cross machine direction is less than 2.5 N/cm.

3. A bonded web according to claim 1 or 2, wherein the denier of the filaments is between 1 and 3 dtex.

4. A bonded web according to any one of the claims 1 to 3, wherein the bonding area of the nonwoven is between 16% and 35%.

5. A bonded web according to any one of the claims 1 to 4, wherein the spunbond nonwoven has an abrasion in the Sutherland Ink Rub test of less than 0.25 mg/cm2.

6. A bonded web according to any one of the claims 1 to 5, wherein the filaments are mono- component filaments made from combinations of different polyolefins, preferably from polypropylene, polyethylene, their copolymers, or combinations thereof.

7. A bonded web according to any one of the claims 1 to 5, wherein the filaments are bi-component filaments made from combinations of different polyolefins, preferably from polypropylene, polyethylene, their copolymers, or combinations thereof.

8. A bonded web according to claim 7, wherein the filaments are sheath-core filaments with propylene core and polyethylene sheath.

9. A bonded web according to claim 8, wherein the cross-section area of the core makes up between 15 and 85 % of the filament and the cross-section area of the sheath makes up between 85 % and 1 5 % of the filament.

10. A bonded web according to any one of the claims 1 to 9, wherein the bonded web has a basis weight of less than 25 g/m2, preferably of less than 22 g/m2.

11. A bonded web according to any one of the claims 1 to 10, wherein the bonded web is a spunbond.

12. A method of manufacturing a bonded web according to any one of claims 1-11 comprising the steps:

   i) extruding a molten first polymer material with a first melt temperature and a molten second polymer material with a second melt temperature which is higher than the first melt temperature through a spinnerette thereby forming a plurality of filaments comprising a first polymer material and a second polymer material,
ii) cooling and stretching the filaments after these have left the spinnerette,
iii) collecting the cooled and stretched filaments on a collecting means to form a non- consolidated web, and
iv) bonding the non-consolidated web by the action of one or more calenders using a calendering temperature which is between the stick point and the standard calendering temperature at which the bonded web with the largest tensile strength at break in machine direction is formed.

13. A method according to claim 12, wherein a calender is used with one or more of the calender rolls being coated with a layer of an anti-stick material for reducing the stick of the bonded web to the one or more of the calendar rolls.

14. A method according to claim 13, wherein the anti-stick material is a fluoropolymer.


**Patentansprüche**

1. Ein verfestigtes Vlies, das Fäden enthält, die ein erstes Polymermaterial mit einer ersten Schmelztemperatur enthalten, und ein zweites Polymermaterial mit einer zweiten Schmelztemperatur, die höher ist, als die erste Schmelztemperatur, wobei das besagte verfestigte Vlies

   - ein Neck-down-Modul in Querrichtung von zumindest 800 N/m aufweist,
   - eine Dehnbarkeit in Querrichtung von zumindest 70% des Messwerts laut DIN EN 29073-3 aufweist, und
   - eine Reißfestigkeit in Querrichtung von höchstens 4 N/cm des Messwerts laut DIN EN 29073-3 aufweist, und

   wobei die Verfestigungen durch Kalandrieren bei einer Kalandriertemperatur zwischen der Haftgrenze und der Standard-Kalandriertemperatur durchgeführt wird, die jener Temperatur entspricht, bei der das verfestigte Vlies mit der größten Reißfestigkeit in der Maschinenlaufrichtung gebildet wird.

2. Das verfestigte Vlies nach Anspruch 1, wobei das Neck-down-Modul in Querrichtung zumindest 1000 N/m beträgt und wobei die Reißfestigkeit in Querrichtung weniger als 2,5 N/m beträgt.

3. Das verfestigte Vlies nach Anspruch 1 oder 2, wobei das Denier der Fäden zwischen 1 und 3 dtex liegt.

4. Das verfestigte Vlies nach irgendeinem der Ansprüche 1 bis 3, wobei der Verfestigungsbereich des Vliesstoffes zwischen 16% und 35% liegt.

5. Das verfestigte Vlies nach irgendeinem der Ansprüche 1 bis 4, wobei der spinngebundene Vliesstoff im Sutherland Ink Rub Test einen Abrieb von weniger als 0,25 mg/cm$^2$ aufweist.

6. Das verfestigte Vlies nach irgendeinem der Ansprüche 1 bis 5, wobei die Fäden Einkomponenten-Fäden aus einer Kombination von verschiedenen Polyolefinen, vorzugsweise aus Polypropylen, Polyethylen, deren Co-Polymeren oder eine Kombinationen davon sind.

7. Das verfestigte Vlies nach irgendeinem der Ansprüche 1 bis 5, wobei die Fäden Zweikomponenten-Fäden aus einer Kombination von verschiedenen Polyolefinen, vorzugsweise aus Polypropylen, Polyethylen, deren Co-Polymeren oder eine Kombinationen davon sind.

8. Das verfestigte Vlies nach Anspruch 7, wobei die Fäden Kernmantelfäden mit Polypropylen-Kern und einem Polyethylen-Mantel sind.

9. Das verfestigte Vlies nach Anspruch 8, wobei der Querschnittbereich des Kerns zwischen 15 und 85% des Fadens ausmacht und der Querschnittbereich des Mantels zwischen 85% und 15% des Fadens ausmacht.

10. Das verfestigte Vlies nach irgendeinem der Ansprüche 1 bis 9, wobei das verfestigte Vlies ein Basisgewicht von weniger als 25 g/m$^2$, vorzugsweise jedoch weniger als 22 g/m$^2$ aufweist.

11. Das verfestigte Vlies nach irgendeinem der Ansprüche 1 bis 10, wobei das verfestigte Vlies ein spinngebundenes Vlies ist.

**12.** Ein Verfahren zur Herstellung eines verfestigten Vlieses nach irgendeinem der Ansprüche 1 bis 11, die folgenden Schritte umfassend:

i) Extrudieren eines mit einer ersten Schmelztemperatur geschmolzenen ersten Polymermaterials und eines mit einer zweiten Schmelztemperatur geschmolzenen zweiten Polymermaterials, die höher ist, als die erste Schmelztemperatur, durch eine Spinnbohrung, die dabei eine Vielzahl von Fäden erzeugt, die ein erstes Polymermaterial und ein zweites Polymermaterial umfassen,
ii) Kühlen und Strecken der Fäden, nachdem diese die Spinnbohrung verlassen haben,
iii) Einsammeln der gekühlten und gestreckten Fäden auf einem Sammelmittel zur Bildung eines nicht konsolidierten Netzes, und
iv) Verbinden des nicht konsolidierten Netzes durch die Einwirkung eines oder mehrerer Glättwerke bei einer Kalandriertemperatur, die zwischen der Haftgrenze und der Standard-Kalandriertemperatur liegt, und jene Temperatur ist, bei der das verfestigte Vlies mit der größten Reißfestigkeit in der Maschinenlaufrichtung gebildet wird.

**13.** Das Verfahren nach Anspruch 12, wobei ein Glättwerk mit einer oder mehreren Glättwalzen verwendet wird, die mit einer Schicht eines Antihaftmittels zur Verringerung der Haftung des verfestigten Vlieses auf einer oder mehreren Glättwalzen versehen sind.

**14.** Das Verfahren nach Anspruch 13, wobei das Antihaftmittel ein Fluorpolymer ist.

**Revendications**

**1.** Un non-tissé lié comprenant des filaments comportant un premier matériau polymère avec une première température de fusion et un second matériau polymère avec une seconde température de fusion qui est supérieure à la première température de fusion, ledit non-tissé lié ayant :

- un module d'étranglement dans le sens travers machine d'au moins 800 N/m,
- une extensibilité dans le sens travers machine d'au moins 70 % comme mesuré selon la norme DIN EN 29073-3, et
- une résistance à la traction dans le sens travers machine au maximum de 4 N/cm comme mesuré selon la norme DIN EN 29073-3, et

dans lequel les liaisons sont effectuées par calandrage à une température de calandre entre le point d'adhérence et la température de calandrage standard qui est la température à laquelle est formé le non-tissé lié de résistance à la traction la plus grande à la rupture dans le sens machine.

**2.** Le non-tissé lié selon la revendication 1, dans lequel le module d'étranglement dans le sens travers machine est d'au moins 1000 N/m et dans lequel la résistance à la traction dans le sens travers machine est inférieure à 2,5 N/cm.

**3.** Le non-tissé lié selon la revendication 1 ou la revendication 2, dans lequel le denier des filaments se situe entre 1 et 3 dtex.

**4.** Le non-tissé lié selon l'une quelconque des revendications 1 à 3, dans lequel la surface de liaison du non-tissé se situe entre 16 % et 35 %.

**5.** Le non-tissé lié selon l'une quelconque des revendications 1 à 4, dans lequel le non-tissé lié au filé a une abrasion dans le test de frottement d'encre de Sutherland de moins de 0,25 mg/cm$^2$.

**6.** Le non-tissé lié selon l'une quelconque des revendications 1 à 5, dans lequel les filaments sont des filaments à composant unique constitués de combinaisons de différentes polyoléfines, de préférence de polypropylène, de polyéthylène, de leurs copolymères ou de leurs combinaisons.

**7.** Le non-tissé lié selon l'une quelconque des revendications 1 à 5, dans lequel les filaments sont des filaments à deux composants constitués de combinaisons de différentes polyoléfines, de préférence de polypropylène, de polyéthylène, de leurs copolymères ou de leurs combinaisons.

**8.** Le non-tissé lié selon la revendication 7, dans lequel les filaments sont des filaments de type à gaine-âme avec une âme de propylène et une gaine de polyéthylène.

9. Le non-tissé lié selon la revendication 8, dans lequel la surface en coupe transversale de l'âme constitue entre 15 et 85% du filament et la surface en coupe transversale de la gaine constitue entre 85 et 15% du filament.

10. Le non-tissé lié selon l'une quelconque des revendications 1 à 9, dans lequel le non-tissé lié a un poids de base de moins de 25 g/m$^2$, de préférence de moins de 22 g/m$^2$.

11. Le non-tissé lié selon l'une quelconque des revendications 1 à 10, dans lequel le non-tissé lié est un lié au filé.

12. Un procédé de fabrication d'un non-tissé lié selon l'une quelconque des revendications 1 à 11, comprenant les étapes consistant :

i) extruder un premier matériau polymère fondu avec une première température de fusion et un second matériau polymère fondu avec une seconde température de fusion qui est supérieure à la première température de fusion à travers une filière, en formant ainsi une pluralité de filaments comprenant un premier matériau polymère et un second matériau polymère,
ii) refroidir et étirer les filaments une fois que ceux-ci ont quitté la filière,
iii) recueillir les filaments refroidis et étiré sur un moyen collecteur pour former un non-tissé non-consolidé, et
iv) lier le non-tissé non-consolidé par l'action d'une ou plusieurs calandres en utilisant une température de calandrage qui se situe entre le point d'adhérence et la température de calandrage standard à laquelle est formé le non-tissé lié de résistance à la traction la plus grande à la rupture dans le sens machine.

13. Le procédé selon la revendication 12, dans lequel on utilise une calandre avec un ou plusieurs des rouleaux de la calandre qui est ou sont revêtus d'une couche d'un matériau antiadhésif pour réduire l'adhérence du non-tissé lié aux un ou plusieurs des rouleaux de la calandre.

14. Le procédé selon la revendication 13, dans lequel le matériau antiadhésif est un fluoropolymère.

# FIG. 1

# FIG. 2

312A

313A

314A

315A

**FIG. 3**

412B

413B

414B

415B

**FIG. 4**

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9932699 A
- US 5057357 A
- US 20020119720 A
- US 20030207640 A
- WO 9504654 A
- EP I131479 A
- WO 2008024739 A
- US 7223818 B
- US 2005164586 A

- US 749170 A
- US 2005165173 A
- WO 9616216 A
- US 5108827 A
- US 6207602 A
- US 5162074 A
- US 5344297 A
- US 5466410 A
- US 5814349 A

**Non-patent literature cited in the description**

- **F. FOURNÉ.** Synthetische Fasern. Carl Hanser Verlag, 1995, 231-596